# EUROPEAN PATENT SPECIFICATION

(11) **EP 3 903 259 B1**
(45) Date of publication and mention of the grant of the patent: **24.01.2024**
(21) Application number: 19845719.4
(22) Date of filing: 27.12.2019
(51) Int. Cl.: G06Q 10/0833

(54) **EQUIPMENT FOR AIDING THE TRACEABILITY OF AGRI-FOOD PRODUCTS**
AUSRÜSTUNG ZUR UNTERSTÜTZUNG DER VERFOLGBARKEIT VON LANDWIRTSCHAFTLICHEN LEBENSMITTELPRODUKTEN
ÉQUIPEMENT D'AIDE À LA TRAÇABILITÉ DE PRODUITS AGRO-ALIMENTAIRES

(30) Priority: 28.12.2018 IT 201800021415
(43) Date of publication of application: 03.11.2021
(73) Proprietor: SISSPRE - SOCIETA' ITALIANA SISTEMI E SERVIZI DI PRECISIONE S.R.L., 20122 Milano (IT)
(72) Inventor: POLO FILISAN, Andrea, 20122 Milano (IT); SCALISE, Fabio Mario, 20122 Milano (IT)
(74) Representative: Studio Torta S.p.A.
(86) International application number: PCT/IB2019/061404
(87) International publication number: WO 2020/136618

(56) References cited:
- WO-A1-2013/109913
- WO-A1-2017/093839
- CA-A1- 2 930 625
- US-A1- 2018 038 805

## Description

### CROSS-REFERENCE TO RELATED APPLICATIONS

This Patent Application claims priority from Italian Patent Application No. 102018000021415 filed on December 28, 2018

### TECHNICAL FIELD

The present invention concerns equipment for aiding the traceability of agri-food products.

### BACKGROUND ART

As is well known, the traceability of products along the supply chain is becoming increasingly important in the agri-food sector. On the one hand, in fact, in many countries traceability is required by food hygiene and safety regulations. On the other hand, it is in the interests, above all, of companies that produce high quality products to be able to best guarantee the public of the origin of the raw materials and the nature of the processing carried out, as well as of their integrity up to marketing. In essence, therefore, there is a need to reduce the scope for possible fraud implemented by substituting or adding raw materials of an origin other than the one declared. This is also all in aid of the fundamental protection of the final consumer who cares about quality.

Numerous solutions have, therefore, been developed to assist in the certification of the origin and processing of marketed products. In general, however, it is precisely the initial link in the traceability chain of agricultural products, namely harvesting, which has a weak point that makes certification difficult and still leaves ample room for attempted fraud. This is particularly true, for example, in the harvesting of fruit of all kinds and for many kinds of vegetables. The difficulties arise from the obvious lack of technological infrastructure at harvesting sites, which currently prevents the necessary operations for product certification from being carried out.

CA 2 930 625 A1 discloses a self-contained equipment renting system comprising a container, an image detector device, a scanning antenna, a satellite positioning device, a storage device and a processing unit. The container has a door to enter an inner cavity of the container where the equipment is stored. The scanning antenna, e. g. a RFID reader, is mounted at an inner wall of the container near the door to define a scanning corridor in proximity to the door. The image detector device is arranged within the inner cavity of the container, so that the container is within an observation region framed by the image detector device. The scanning antenna detects RFID tags in the scanning corridor, which is within the observation region framed by the image detector device. The image detector device is coupled to the scanning antenna and is configured to acquire at least a reference image in response to signals from RFID tags detected by the scanning antenna. The processing unit is configured to associate the reference image with coordinates detected by the satellite positioning device and a timestamp and to store the reference image, the coordinates detected by the satellite positioning device, and the timestamp in the storage device.

Other known systems are disclosed in US 2018/038805 A1, in WO 2013/109913 A1 and in WO 2017/093839 A1.

### DISCLOSURE OF INVENTION

The purpose of the present invention is to provide equipment for aiding the traceability of agri-food products that makes it possible to overcome, or at least to mitigate, the limitations described.

According to the present invention, therefore, equipment is provided for aiding the traceability of agri-food products as defined in claim 1.

### BRIEF DESCRIPTION OF THE DRAWINGS

Further features and advantages of the present invention will become clear from the following description of the non-limiting embodiments thereof, with reference to the accompanying drawings, in which:
- Figure 1 is a prospective view of a piece of equipment for aiding the traceability of agri-food products according to one embodiment of the present invention;
- Figure 2 is a side view of the equipment in Figure 1;
- Figure 3 shows a simplified block diagram of the equipment in Figure 1;
- Figures 4a-4c show alternative examples of one element of the equipment in Figure 1 in use;
- Figure 5 shows the equipment of Figure 1 in use;
- Figure 6 is a simplified flow diagram relating to a first procedure carried out by the equipment in Figure 1;
- Figure 7 is a simplified flow diagram relating to a second procedure carried out by the equipment in Figure 1;
- Figure 8 is a schematic side view of a piece of equipment for aiding the traceability of agri-food products according to a different embodiment of the present invention; and
- Figure 9 is a simplified block diagram of a system for tracing agri-food products incorporating equipment of the type shown in Figure 1.

### BEST MODE FOR CARRYING OUT THE INVENTION

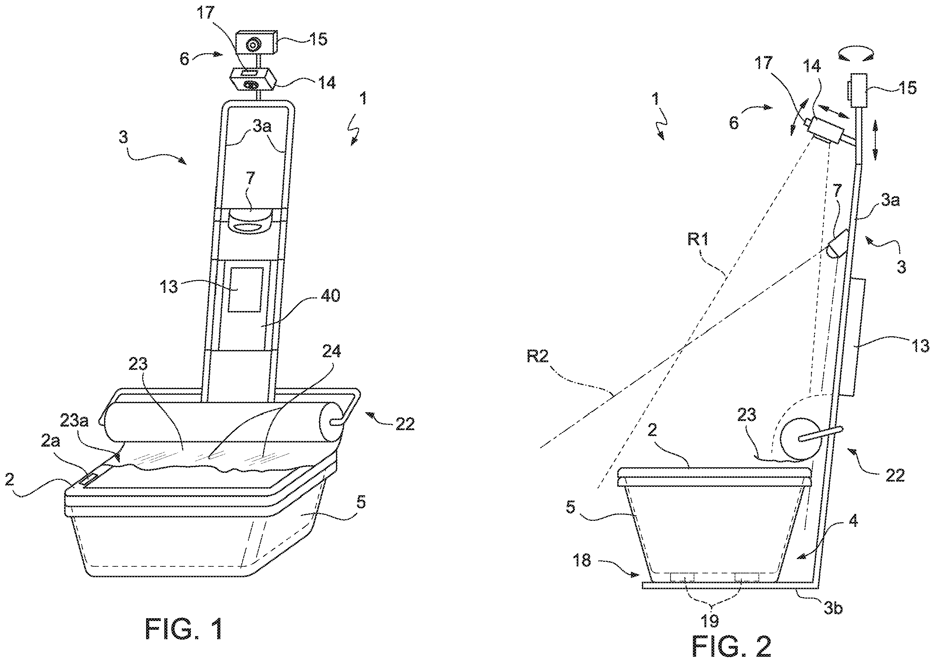

With reference to Figures 1 and 2, the equipment for aiding the traceability of agri-food products is indicated, as a whole, with the number 1. The equipment 1 is especially designed to support traceability during the harvesting of fruit and vegetables of all kinds.

The equipment 1 comprises a container 2 for harvesting fruit and a frame 3, provided with connecting members 4 for connecting it to the container 2.

The container 2 may be any container that is open upwards and is used for harvesting fruit or vegetables. In the example in Figure 1, the container 2 is a stackable box with other boxes of the same type (generally suitable for holding a few kilos of product and, therefore, easily transportable by hand). Alternatively, the container 2 may be a standard container (BIN) suitable for containing larger quantities of product and that may be moved using mechanical forks. In one embodiment, the container 2 is provided with an identification label 2a, which contains a unique identification code and may either be optically readable (e.g. with a barcode) or electromagnetic (e.g. RFID tag).

In one embodiment, the frame 3 comprises a vertical support 3a defined by one or more uprights fixed to the connecting members 4, which are configured, in particular, to enable the frame 3 to be reversibly connected to the container 2. In the embodiment in Figure 1, in particular, the connecting members 4 comprise a base 5 designed to receive the container 2 and fixed to a ground support portion 3b of the frame 3. The base 5, in particular, may be defined by a stackable box that is identical to the container 2. In this way, the coupling between the frame 3 and the container 2 is quick and easy and, in addition, the positioning of the container 2 is precise and may be repeated. In an embodiment not shown, the base may be planar, for example with an essentially horizontal plate for receiving, and supporting, the container 2. Alternatively, the connecting members may comprise clamps, grippers, or coupling or screw-in fastening systems, and the like.

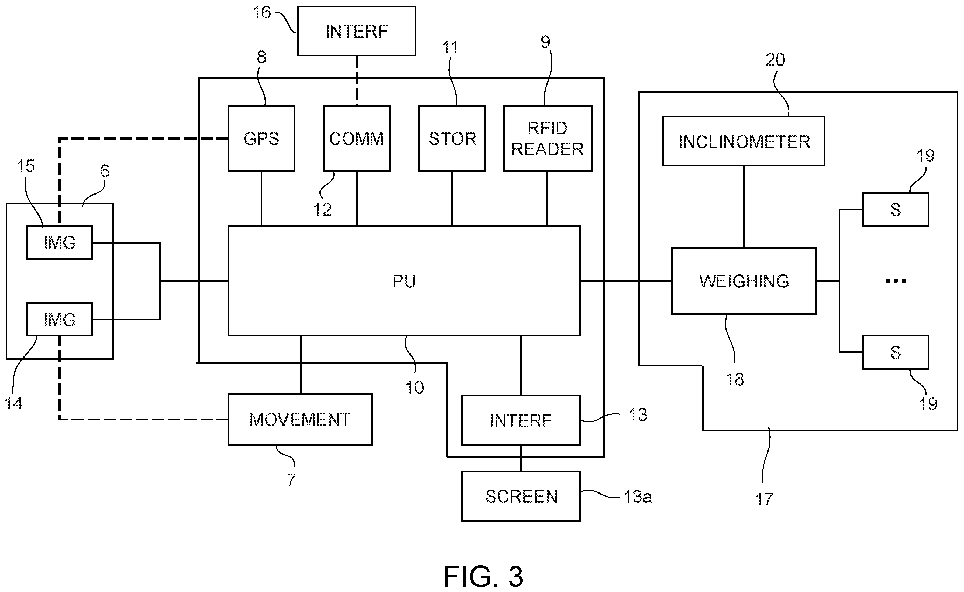

Also with reference to Figure 3, the equipment 1 comprises, in addition, an image detector device 6, a motion sensor 7, a satellite positioning device 8, an identification tag reader 9, a processing unit 10, equipped with a storage device 11, and a wireless communication module 12, all fitted to the frame 3. A local command interface 13 is equipped with a screen 13a and may be supported by the frame 3 and connected, via a cable, to the processing unit 10 or it may be defined by a mobile device, such as a smartphone or tablet, and communicably coupled to the processing unit 10 via the wireless communication module 12, e.g. using the Bluetooth communication standard. Alternatively, a remote interface 16 may be communicably coupled to the processing unit 10 for the same purpose via the wireless communication module 12. At least the satellite positioning device 8, the identification tag reader 9, the processing unit 10, the storage device 11, the wireless communication module 12, and the command interface 13 may be housed inside the same housing 40 fixed to the frame 3.

In one embodiment, the image detector device 6 comprises image sensors 14, 15, provided with their respective fixed or variable optics, not shown, and an illuminator 17.

The image sensors 14, 15 may be essentially visible band sensors that are, such as CMOS or CCD sensors, or infrared or ultraviolet radiation sensors, laser scanners or, in general, any type suitable for being fitted to the frame 3.

The image sensor 14 is oriented towards the base 5 so as to frame an observation region R1 including the opening of the container 2 when the latter is placed in the base 5, as shown in Figure 2. The image sensor 14 is configured to acquire individual images and/or image sequences for a programmed period of time based on the type of activity to be observed and traced in response to movements detected by the motion sensor 7 and to remain on standby in the absence of signals indicating movements detected by the motion sensor 7. The coupling with the motion sensor 7 may be direct or indirect via the processing unit 10 (Figure 3). In other words, the image sensor 14 may respond directly to the signals coming from the motion sensor 7 or commands generated by the processing unit 10 in response to signals coming from the motion sensor 7. In one embodiment, the image acquisition is carried out with a delay, for example, of a few seconds, with respect to the moments wherein the motion sensor 7 detects a movement or the last of a sequence of movements in its sensitive range.

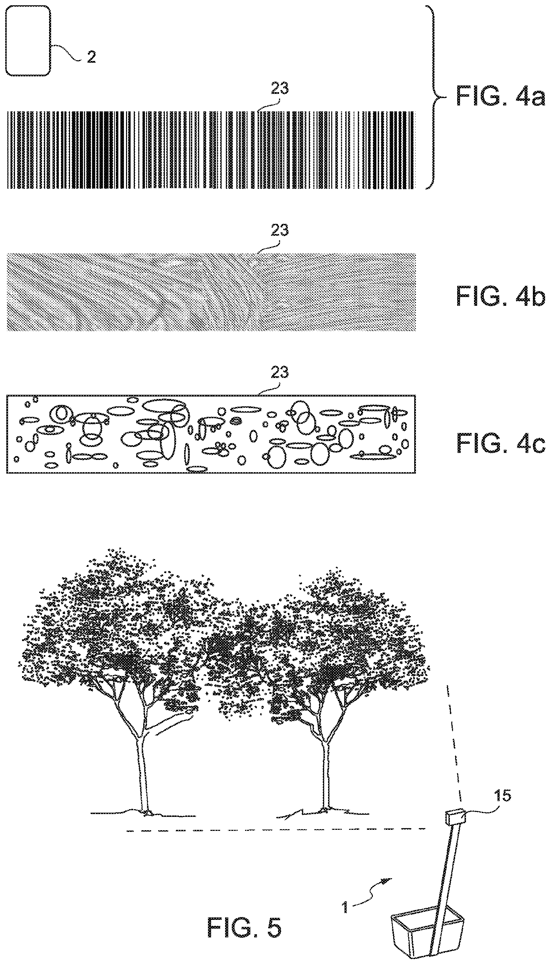

The image sensor 15 is oriented so that it can take landscape images of a portion of the land around the equipment 1 where the harvesting is carried out, in particular of trees from which fruit is harvested, as well as installations, fences, portions of buildings, and any objects that may be present (Figure 4). The image sensor 15 may be activated manually via commands provided by an operator via the command interface 13 or in response to a spatial coordinate change indicated by the satellite positioning device 8 (e.g. as a result of displacements exceeding a programmed minimum distance).

In an alternative embodiment that is not shown, it is possible to use a single image sensor that may be oriented either towards the base 5, or towards the surroundings and/or variable optics that enable to manually or automatically switch between different frames on the basis of a pre-set mode.

The motion sensor 7 may be, for example, a passive infrared sensor, a DMT ("Digital Motion Technology") sensor, a microwave sensor, an ultrasonic sensor, or a combination of these. The motion sensor 7 is oriented towards the base 5 to detect movements in a surveillance region R2, including at least a portion of the observation region R1 framed by the image detector device 6. In particular, the motion sensor 7 is configured so as to be activated by inserting the container 2 into the base 5 and by pouring the harvested fruit into the container 2, which is already in the base 5. In practice, therefore, the motion sensor 7 enables to identify the introduction of the container 2, empty or full, in the base 5 and the actions involving a change in the contents of the container 2 when it is in the base 5.

As mentioned, in addition, the motion sensor 7 determines, directly or indirectly and via the processing unit 10, the acquisition of images by the image sensor 14.

The satellite positioning device 8 is, for example, a GPS locator or GNSS navigator and is communicably coupled to the processing unit 10 to provide, in response to a command, a pair of spatial coordinates (longitude and latitude).

The identification tag reader 9 is of a type that is suitable for reading the identification labels 2a on the container 2. Depending on the identification labels 2a used, the identification tag reader 9 may comprise, for example, a barcode reader or an RFID tag reader. In the first case, the identification tag reader 9 may be implemented by the processing unit 10 and the image sensors 14, 15 if the identification labels 2a are affixed to portions of the containers 2 that are visible during harvesting. In this case, the processing unit 10 may extract portions of the image corresponding to the identification labels 2a and recognise them.

The equipment 1 comprises, in addition, a weighing device 17, configured to determine the weight of the container 2 placed in the base 5 (Figures 2 and 3). The weighing device 17 comprises a processing module 18, one or more weight sensors 19, arranged so as to be loaded when the container 2 is in the base 5, and an inclinometer 20, rigidly fixed to the frame 3. In one embodiment, the processing module 18 may be integrated into the processing unit 10. The weight sensors 19 may, for example, be load cells placed under the base 5 near the vertexes. The inclinometer 20 may be advantageously based on an accelerometer or on a multi-axial, micro electro-mechanical gyroscope.

The processing unit 10 cooperates with the weight sensors 19 and with the inclinometer 20 to determine the weight of the container 2 placed in the base 5. In particular, the processing unit 10 determines an inclination of the container 2 with respect to a horizontal plane, using an inclination signal provided by the inclinometer 20 and/or by combining the raw weight values provided by the weight sensors 19. The raw weight values are then corrected by the processing unit 10, according to the determined inclination. In addition, the processing unit 10 may subtract the tare of the container 2 using a value recorded in the storage device 11 or by directly weighing the empty container, if possible.

In one embodiment (Figures 1 and 2), the equipment 1 comprises a dispenser 22 that provides an anti-tamper or tamper proof film 23, which may be applied to close the container 2 and that is destroyed when removed. The dispenser 22 comprises a roll of anti-tamper film 23 supported by the frame 3 so that it swivels around an axis parallel to the base 5 at a height that is slightly higher than the height of the container 2 that is housed in the base 5. The anti-tamper film 23 can thus be extended and applied to close the container 2 before the container 2 itself is removed from the base 5. In one embodiment, the anti-tamper film 23 is made of a transparent perforated and biodegradable polymer material and has weakening lines 24. In practice, once applied, the anti-tamper film 23 breaks along the weakening lines 24 upon an attempt to remove it, revealing an anomaly. In addition, the anti-tamper film 23 has, on one face 23a, visible graphic signs 25 that do not repeat or repeat across a section that is greater than the length of film required to close the container 2 (examples of graphic signs 25 are shown in Figures 4a-4c; Figure 4a also shows, merely by way of example, the dimensions of the container 2 in relation to the anti-tamper film 23). The graphic signs 25 are made so that, once the container 2 is closed, the appearance presented towards the image sensor 14 is unique (or, in any case, difficult to reproduce). An optical examination of the graphic signs 25, therefore, makes it possible to determine whether the anti-tamper film 23 has been replaced. The graphic signs 25 may be realistic or abstract images or they may comprise graphic codes, such as linear or two-dimensional barcodes.

The processing unit 10 is configured to associate the images provided by the image sensor 14 with the coordinates detected by the satellite positioning device 8 at the time of detection and a timestamp that is synchronised with a time reference system, e.g. via the internet. In addition, the processing unit 10 stores the images acquired in the storage device 11 together with the respective coordinates and timestamps. At the same time, the processing unit 10 also stores, in the storage device 11, the unique identification code associated with the container 2, the subject of the acquired image, and provided by the identification label reader 9.

The processing unit 10 is provided with an image processing module 30 configured to carry out feature extraction and image comparison (identity verification) operations. For this purpose, the image processing module 30 uses processing techniques and algorithms such as orientation, dimensional and geometrical normalisation (e.g. taking the edges of the container 2 and/or specially applied markers as reference), brightness equalisation, colour equalisation, noise reduction, smoothing, contour recognition, detection of elements with specific colour bands (e.g. fruits with different degrees of ripeness), segmentation of the image into sub-areas, pattern recognition, standards definition and measurement of standards to determine whether the images are identical or different. The techniques and algorithms used may be optimised based on the graphic signs 25 on the anti-tamper film to the type of fruit or vegetable harvested (grapes, olives, or tomatoes, etc.). The operations of orientation adjustment and dimensional and geometric normalisation may be carried out by taking elements of various types present in the image, and useful for characterising the positioning of the image itself in space and time, as a reference. As a non-limiting example, elements of the images that are useful for this purpose include: features of the type of ground or support base (grassy meadow, transport vehicle bed, asphalt area, or differently paved area), fixed landmarks on the ground (road markers, signposts, road signs, distinctive features of the area such as buildings, portions of wall, fences, poles, and overhead line pylons) and characteristic and unique elements (parts of machinery and various pieces of equipment).

The processing unit 10 also uses the image processing module 30 to estimate a product volume inside the container 2 placed in the base 5 from the images acquired by the image sensor 14, and to determine the weight of the container 2 based on the estimated product volume and information on the product's features that are stored in the storage device 11. The processing unit 10 thus integrates the weighing device 17.

Via the image processing module 30, the processing unit 10 is also able to recognise foreign objects that may have been introduced into the container 5 by mistake or as a result of an attempt at fraud (e.g. stones or different amounts of fruit). In particular, the storage device 11 contains admissible values of recognition parameters for the identification of agri-food product units (e.g. minimum and maximum dimensions on one or more axes, shape parameters, or colour bands, etc.) and the image processing module 30 identifies the presence of objects that are not compatible with the admissible values of the recognition parameters.

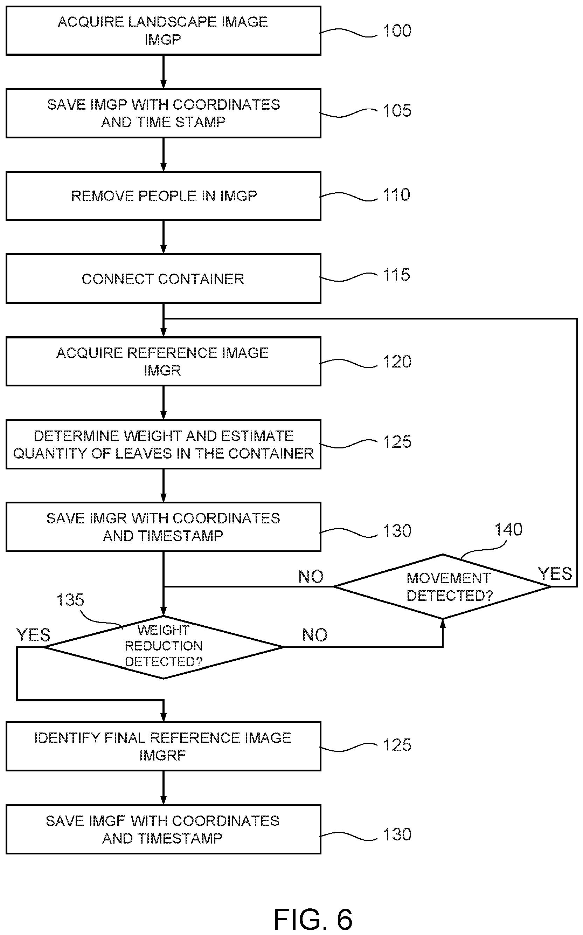

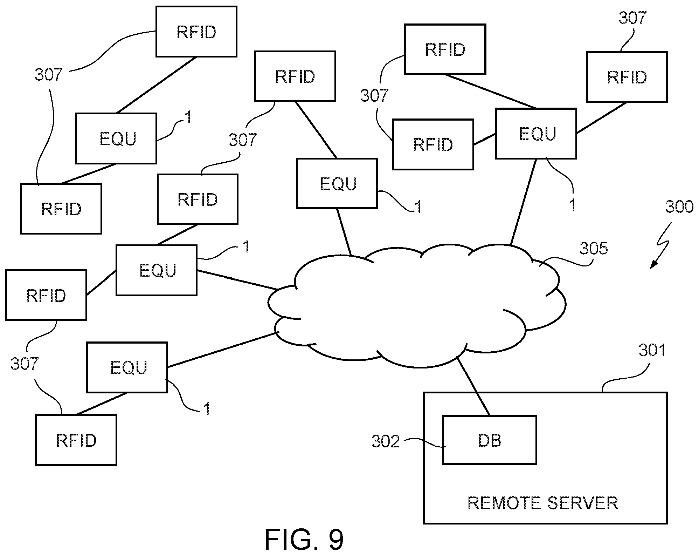

As shown in Figure 5, in use, the equipment 1 is placed near a harvesting area of agricultural land and is operated (manually at the location or remotely via a network connection) before harvesting begins. Appropriate diagnostic programmes present in the equipment signal to the operator any operating anomalies both in direct mode (via screen or LCD display) and via network connection to a remote control unit (see, for example, the remote server 301 in Figure 9). With reference to Figure 6, the satellite positioning device 8 detects spatial coordinates that correspond to a displacement, from the last location, that is greater than the programmed minimum distance and the image sensor 15 is activated accordingly. Alternatively, the image sensor 15 is manually activated via the command interface 13. In both cases, the image sensor 15 detects a landscape image IMGP around the equipment 1 (block 100), including plants before harvesting. The landscape image IMGP is saved by the processing unit 10 in the storage device 11 together with the coordinates provided by the satellite positioning device 8 and the timestamp (block 105). At this stage, the processing unit 10 may identify the presence of people in the landscape image IMGP and remove them or make them unrecognisable to avoid confidentiality violations (block 110).

Next (block 115), a container 2 is connected to the frame 3. The connection may be obtained by placing the container 2 in the base 5 or, if the container 2 is a standard container (BIN) and there is no base 5, by applying the frame 3 with the connecting members (grippers or clamps, etc.).

The act of connecting activates the motion sensor 7, which triggers the acquisition of a reference image IMGR by the image sensor 14 (block 120) and the determination of the weight of the container 2 (block 122). The weight of the container 2 may be determined either directly by the weighing device 17 or, if the weighing device 17 is not available, indirectly by the processing unit 10 based on the reference image IMGR. In particular, the processing unit 10 is configured to estimate the volume taken up by the product in the container 2 using the image processing module 30 and product's average specific gravity data, which are stored in the storage device 11. In one embodiment, in addition, the processing unit 10 is optionally configured to compare the weight of the container 2 determined by the weighing device 17 with the weight derived from the estimated volume taken up by the product in the container 2. In this way it is possible to assess the amount of foreign material or waste present, such as leaves or twigs, and whether defoliation should be carried out directly in the field to optimise harvesting and transport to the processing plant. The reference image IMGR and weight information are then saved in the storage device 11 with the coordinates provided by the satellite positioning device 8 and a respective timestamp (block 125) .

As long as the container 2 remains connected to the frame 3 (block 130, output NO), movements inside the surveillance region R2 of the motion sensor 7 are detected (block 135, output YES) and trigger the acquisition and saving of a new reference image IMGR (blocks 120-130). Movements may generally correspond to the addition of products to the container 2 from other containers or harvesting means, or to the sealing of the container 2 with a corresponding portion of the anti-tamper film 23. The anti-tamper film portion is uniquely identifiable and, since it is almost, if not completely, impossible to replace it with an identical portion, the possibility of tampering with the contents is greatly reduced.

If no movements are detected (block 135, NO output), the image sensor 14 will remain on hold to minimise power consumption.

When the container 2 is separated from the frame 3, the weighing device 17 detects a weight decrease (block 130, output YES), the processing unit 10 identifies the last stored reference image (block 140) and saves it in the storage device 11 as the final reference image IMGRF, with its corresponding spatial coordinates, timestamps, identification codes, and, possibly, weight (block 145). Alternatively, the final reference image IMGRF may also be acquired and marked as such in response to a command provided by an operator via the local command interface 13 or via a remote command interface 13.

The final reference image IMGRF, in practice, corresponds to a (uniquely defined) portion of the anti-tamper film 23, if used, or of the product configuration in the container 2. In both cases, the final reference image IMGRF represents the state of the filled container 2 before it is handed over for the successive transport and/or processing steps.

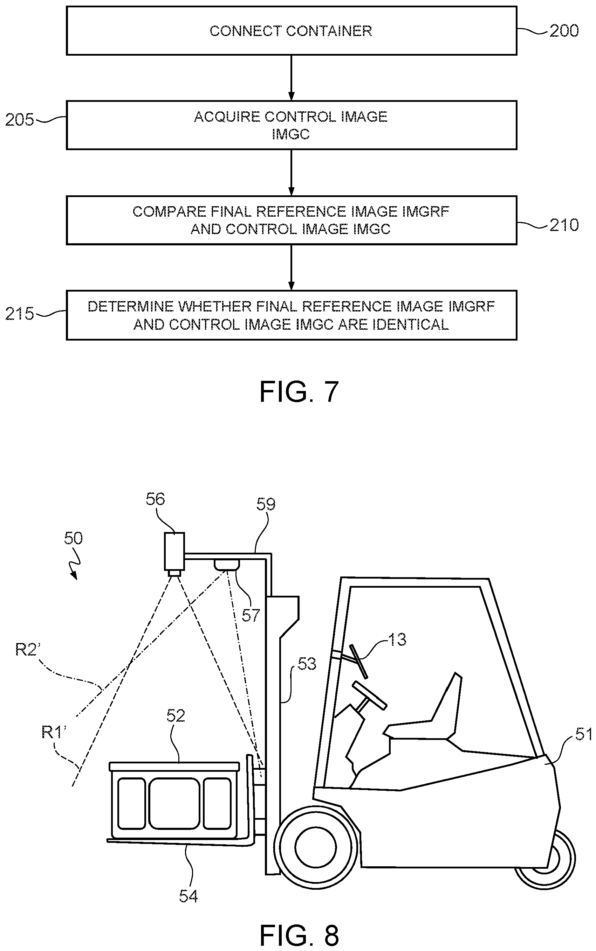

With reference to Figure 7, before placing the harvested product in a transport container (e.g. from a harvesting box to a container or BIN), or when entering a processing plant, the container 2 is reconnected to the frame 3 (block 200) and the image sensor 14 acquires a control image IMGC in response to a command from the processing unit 10 (block 205). Using the frame 3, the point of view of the control image IMGC coincides with the point of view of the IMGRF final reference image. The two images may then be easily compared by the image processing module 30 of the processing unit 10 (block 210). As mentioned above, the image processing module 30 for the comparison may use processing techniques and algorithms such as orientation, dimensional and geometrical normalisation (e.g. taking as reference the edges of the container 2 and/or specially applied markers), brightness equalisation, colour equalisation, noise reduction, smoothing, contour recognition, detection of elements with specific colour bands (e.g. fruits with different degree of ripeness), segmentation of the image into sub-areas, pattern recognition, standards definition and measurement of standards. Recognition algorithms may generally be applied both when the container 2 is sealed with the anti-tamper film 23 and when the container is open. In the first case, the image processing module 30 may directly compare the appearance of the graphic signs 25 on the anti-tamper film 23 as shown in the acquired images or, if there is a code on the anti-tamper film 23, the code may be decoded and the comparison may be carried out by the processing unit 10 on the decoding results.

The comparison is carried out by the image processing module 30 and by the processing unit 10 by applying programmed tolerance thresholds to take into account possible discrepancies due to different lighting conditions and possible product movements in the container, if the anti-tamper film is not used 23.

Based on the comparison and tolerance thresholds applied, the processing unit 10 determines (confirms or denies) whether the control image IMGC and the final reference image IMGRF, which is associated with the container 2 and stored in the storage device 11 (block 215), are identical.

In this way, the equipment 1 enables the tracing of food products, in particular fruit and vegetables, from the moment of harvesting, thus avoiding the lack of technological infrastructure at the harvesting points, which often prevents the operations necessary for certification from being carried out. The equipment 1 therefore makes it possible to reduce the possibility of attempted fraud and, in general, the risk that the product delivered for successive processing steps is of a different origin from the one declared. The IMGRF final reference image and control image IMGC data can be made available to a remote station for any additional processing and integration into the traceability chain. In addition, the control is carried out almost completely automatically, without interfering with employees' activities.

With reference to Figure 8, a piece of equipment 50, in accordance with a different embodiment of the present invention, is fitted to a motorised forklift 51 and comprises a frame 53 provided with connecting members 54 for connecting to a container 52 for harvesting fruit, here a standard container (BIN). In the example described, the frame 52 and the connecting members 54 are defined by lifting masts and forklift forks 51 respectively. In addition, the equipment 50 comprises, an image detector device 56 and a motion sensor 57 connected to the frame 52 by a bracket 59. The image detector device 56 is oriented towards connecting members 54 so as to frame an observation region R1' including the opening of the container 52 when it is placed on the forks of the forklift 51, i.e. when it is coupled to the connecting members 54.

The motion sensor 57 is oriented towards the connecting members 54 to detect movements in a surveillance region R2' including at least a portion of the observation region R1' framed by the image detector device 56. In particular, the motion sensor 57 is configured so as to be activated by the act of positioning the container 52 on the connecting members 54 (forks) and by the pouring of harvested fruit into the container 52, which is already positioned on the forks. As in the example in Figures 1 and 2, therefore, the motion sensor 57 enables to identify the introduction of the container 52, empty or full, and the actions that imply a change in its contents.

Though not shown here, for the sake of simplicity, there is a satellite positioning device 8, an identification tag reader 9, a processing unit 10 with storage device 11, and a wireless communication module 12, essentially as already described with reference to Figure 3. The local command interface 13 can be placed on board the forklift 51. As in the example above, the processing unit 10 associates the reference images with the coordinates detected by the satellite positioning device 8 and a timestamp, and stores the reference images, the coordinates detected by satellite positioning device 8, and the timestamp in the storage device 11.

Figure 9 schematically shows a system 300 for the traceability of agri-food products that comprises a plurality of pieces of equipment 1, which are essentially of the type already described, and a remote server 301, which hosts a database 302. The remote server 301 can be connected to each piece of equipment 1 via an extended communication network 305 (e.g. the internet) and their respective wireless communication modules. Different examples of this equipment 1 may differ from each other, for example, in aspects such as the shape of the frame or the structure of the base, including in relation to the type of container used, but they are still equipped with the photograph-taking, georeferencing, and timestamping functions to document the configuration of the containers before transport. The system 300 can also comprise identification labels 307, e.g. RFID tags, for the unique identification of the specific site of origin. The identification labels 307 may be applied to individual plants or groups of plants, or they can be associated with portions of the harvesting land. The identification labels 307 can be read by the identification tag readers of the equipment 1 and be associated with the reference and control images acquired when the equipment 1 is used, together with other information.

The information stored in the storage devices of the equipment 1 (reference images, control images, container identification codes, spatial coordinates, timestamps, and weight data) is transferred to the database 302 when the connection via the extended communication network 305 is available, since harvesting areas are frequently not covered by these services, or are not continuously covered, meaning that there are significant service disruptions. Once uploaded into the database 305, the information is incorporated into the traceability chain and is available to document the integrity of the products from the first steps of harvesting, to the benefit of both consumers and monitoring authorities.

It is clear that modifications and variations can be made to the equipment described herein while remaining within the scope of protection defined by the attached claims.

## Claims

1. Equipment for aiding traceability of agri-food products, comprising:
a container (2; 52) for harvesting agri-food products that is open upwards;
a frame (3; 53), provided with connecting members (4; 54) to the container (2; 52);
an image detector device (14, 15; 64), fitted to the frame (3; 53) and oriented so that, when the container (2; 52) is connected to the frame (3; 53), an opening of the container is within an observation region (R1; R1') framed by the image detector device (14, 15; 64);
a motion sensor (7; 57) fitted to the frame (3; 53) and configured to detect movements within a surveillance region (R2; R2') including at least a portion of the observation region (R1; R1') framed by the image detector device (14, 15; 64);
a satellite positioning device (8);
a storage device (11);
a processing unit (10);
wherein the image detector device (14, 15; 64) is coupled to the motion sensor (7; 57) and is configured to acquire at least a reference image (IMGR, IMGRF) in response to a movement detected by the motion sensor (7; 57) ;
and wherein the processing unit (10) is configured to associate the reference image (IMGR, IMGRF) with coordinates detected by the satellite positioning device (8) and a timestamp and to store the reference image (IMGR, IMGRF), the coordinates detected by the satellite positioning device (8), and the timestamp in the storage device (11).

2. The equipment according to claim 1, comprising an identification tag reader (9), wherein the container (2) is provided with an identification tag (2a) identifiable by the identification tag reader (9).

3. The equipment according to claim 2, wherein the processing unit (10) is communicably coupled to the identification tag reader (9) and is configured to associate the reference image (IMGR, IMGRF) acquired by the image detector device (14, 15) with an identification code of the identification tag (2a) on the container (2).

4. The equipment according to any one of claims 1 to 3, comprising a dispenser (22) supplying an anti-tamper film (23), applicable to close the container (2).

5. The equipment according to claim 4, wherein the anti-tamper film (23) has weakening lines (24), so that, once applied, the anti-tamper film (23) breaks along the weakening lines (24) upon a removal attempt.

6. The equipment according to claim 4 or 5, wherein the anti-tamper film (23) has, on one face (23a), graphic signs (25) that do not repeat or repeat with a spatial period greater than a length of the anti-tamper film (23) required to close the container (2).

7. The equipment according to any one of claims 1 to 6, comprising a weighing device (17), configured to determine a weight of the container (2).

8. The equipment according to claim 7, wherein the weighing device (17) comprises a processing module (18), weight sensors (19), arranged so as to be loaded by the container (2) connected to the frame (3), and an inclinometer (20), and wherein the processing unit (10) is configured to determine the weight of the container (2) on the basis of a response of the weight sensors (19) and a response of the inclinometer (20).

9. The equipment according to claim 7 or 8, wherein the processing unit (10) is configured to estimate a product volume inside the container (2) from the reference image (IMGR, IMGRF) acquired and to determine the weight of the container (2) based on the estimated volume and of product information stored in the storage device (11).

10. The equipment according to any one of claims 7 to 9, wherein the image detector device (14, 15) is activatable to acquire a final reference image (IMGRF) of the container (2) in response to a weight reduction detected by the weighing device (17) and the processing unit (10) is configured to associate the final reference image (IMGRF) with respective coordinates detected by the satellite positioning device (8) and a respective timestamp and to store the final reference image (IMGRF), the coordinates detected by the satellite positioning device (8), and the timestamp in the storage device (11).

11. The equipment according to any one of claims 7 to 9, wherein the image detector device (14, 15) is activatable in response to a manual command receivable through a command interface (13, 16) and to acquire a final reference image (IMGRF) of the container (2) and the processing unit (10) is configured to associate the final reference image (IMGRF) with respective coordinates detected by the satellite positioning device (8) and a respective timestamp and to store the final reference image (IMGRF), the coordinates detected by the satellite positioning device (8), and the timestamp in the storage device (11).

12. The equipment according to claim 10 or 11, wherein the image detector device (14, 15) is configured to acquire a control image (IMGC) of the container (2) in response to a command of the processing unit (10) and wherein the processing unit (10) is configured to:
compare the control image (IMGC) and the final reference image (IMGRF) associated with the container (2) and stored in the storage device (11); and
apply programmed tolerance thresholds; and
confirm or deny that the control image (IMGC) and the final reference image (IMGRF), associated with the container (2) and stored in the storage device (11), are identical based on the comparison and on the tolerance thresholds.

13. The equipment according to claim 12 as dependent on claim 6, wherein the processing unit (10) is configured to recognize and compare the graphic signs (25) of the control image (IMGC) and of the final reference image (IMGRF) associated with the container (2) and stored in the storage device (11).

14. The equipment according to any one of claims 1 to 13, wherein the storage device (11) contains admissible values for recognition parameters for identifying agri-food product units, and the processing unit (10) is configured to identify the presence of objects not compatible with the admissible values for the recognition parameters.

15. The equipment according to any one of claims 1 to 14, wherein the container (2) is a stackable picking box and the connecting members (4) comprise a stackable box identical to the container (2).

16. The equipment according to any one of the foregoing claims, wherein the image detector device (14, 15) is configured to acquire a landscape image around the frame (3) in response to a command of the processing unit (10) and the processing unit (10) is configured to request the acquisition of a landscape image (IMGP) in response to a coordinate change detected by the satellite positioning device (8).

17. The equipment according to any one of the foregoing claims, comprising a wireless communication module (12) configured to communicate with a remote station.

18. A system for the traceability of agri-food products, comprising at least one piece of equipment (1) according to any one of the foregoing claims and a remote station (301) comprising a database (302), wherein the processing unit (10) of each piece of equipment (1) is configured to store in the database (302) the images acquired by the respective image detector device (14, 15; 64) with the respective timestamp and with the coordinates detected by the respective satellite positioning device (8).

## Patentansprüche

1. Einrichtung zur Unterstützung der Rückverfolgbarkeit von Agrarlebensmitteln, aufweisend:
- einen nach oben offenen Behälter (2; 52) zum Ernten von landwirtschaftlichen Lebensmitteln;
- einen Rahmen (3; 53), der mit Verbindungselementen (4; 54) zum Behälter (2; 52) versehen ist;
- eine Bilddetektorvorrichtung (14, 15; 64), die an dem Rahmen (3; 53) angebracht und so ausgerichtet ist, dass, wenn ein Behälter (2; 52) mit dem Rahmen (3; 53) verbunden ist, eine Öffnung des Behälters innerhalb eines von der Bilddetektorvorrichtung (14, 15; 64) umrahmten Beobachtungsbereichs (R1; R1') liegt;
- einen Bewegungssensor (7; 57), der an dem Rahmen (3; 53) angebracht und so konfiguriert ist, dass er Bewegungen innerhalb eines Überwachungsbereichs (R2; R2') erfasst, der zumindest einen Teil des von der Bilddetektorvorrichtung (14, 15; 64) umrahmten Beobachtungsbereichs (R1; R1') einschließt;
- eine Satellitenortungsvorrichtung (8);
- eine Speichervorrichtung (11);
- eine Verarbeitungseinheit (10);
wobei die Bilddetektorvorrichtung (14, 15; 64) mit dem Bewegungssensor (7; 57) gekoppelt und so konfiguriert ist, dass sie als Reaktion auf eine von dem Bewegungssensor (7; 57) erfasste Bewegung mindestens ein Referenzbild (IMGR, IMGRF) erfasst;
und wobei die Verarbeitungseinheit (10) so konfiguriert ist, dass sie das Referenzbild (IMGR, IMGRF) mit von der Satellitenpositionierungsvorrichtung (8) erfassten Koordinaten und einem Zeitstempel verknüpft und das Referenzbild (IMGR, IMGRF), die von der Satellitenpositionierungsvorrichtung (8) erfassten Koordinaten und den Zeitstempel in der Speichereinrichtung (11) speichert.

2. Einrichtung nach Anspruch 1, umfassend einen Identifikationsetikettenleser (9), wobei der Behälter (2) mit einem Identifikationsetikett (2a) versehen ist, das durch den Identifikationsetikettenleser (9) identifizierbar ist.

3. Einrichtung nach Anspruch 2, wobei die Verarbeitungseinheit (10) kommunikationsfähig mit dem Identifikationsetikettenleser (9) gekoppelt und so konfiguriert ist, dass sie das von der Bilddetektorvorrichtung (14, 15) erfasste Referenzbild (IMGR, IMGRF) mit einem Identifikationscode des Identifikationsetiketts (2a) auf dem Behälter (2) verknüpft.

4. Einrichtung nach einem der Ansprüche 1 bis 3, umfassend einen Spender (22), der eine manipulationssichere Folie (23) liefert, die zum Verschließen des Behälters (2) geeignet ist.

5. Einrichtung nach Anspruch 4, wobei die manipulationssichere Folie (23) Schwächungslinien (24) aufweist, so dass die manipulationssichere Folie (23) nach ihrer Anbringung bei einem Entfernungsversuch entlang der Schwächungslinien (24) reißt.

6. Einrichtung nach Anspruch 4 oder 5, wobei die manipulationssichere Folie (23) auf einer Seite (23a) grafische Zeichen (25) aufweist, die sich nicht wiederholen oder mit einer räumlichen Periode wiederholen, die größer ist als die Länge der manipulationssicheren Folie (23), die zum Verschließen des Behälters (2) erforderlich ist.

7. Einrichtung nach einem der Ansprüche 1 bis 6, umfassend eine Wiegevorrichtung (17), die so konfiguriert ist, dass sie ein Gewicht des Behälters (2) bestimmt.

8. Einrichtung nach Anspruch 7, wobei die Wiegevorrichtung (17) ein Verarbeitungsmodul (18), Gewichtssensoren (19), die so angeordnet sind, dass sie von dem mit dem Rahmen (3) verbundenen Behälter (2) belastet werden, und einen Neigungsmesser (20) umfasst, und wobei die Verarbeitungseinheit (10) so konfiguriert ist, dass sie das Gewicht des Behälters (2) auf der Grundlage einer Antwort der Gewichtssensoren (19) und einer Antwort des Neigungsmessers (20) bestimmt.

9. Einrichtung nach Anspruch 7 oder 8, wobei die Verarbeitungseinheit (10) so konfiguriert ist, dass sie ein Produktvolumen innerhalb des Behälters (2) aus dem erfassten Referenzbild (IMGR, IMGRF) schätzt und das Gewicht des Behälters (2) auf der Grundlage des geschätzten Volumens und der in der Speichervorrichtung (11) gespeicherten Produktinformationen bestimmt.

10. Einrichtung nach einem der Ansprüche 7 bis 9, wobei die Bilddetektorvorrichtung (14, 15) aktivierbar ist, um ein endgültiges Referenzbild (IMGRF) des Behälters (2) als Reaktion auf eine von der Wiegevorrichtung (17) erfasste Gewichtsreduzierung zu erfassen, und die Verarbeitungseinheit (10) konfiguriert ist, um das endgültige Referenzbild (IMGRF) mit von der Satellitenpositionierungsvorrichtung (8) erfassten perspektivischen Koordinaten und einem jeweiligen Zeitstempel zu verknüpfen und das endgültige Referenzbild (IMGRF) zu speichern, die von der Satellitenpositionierungsvorrichtung (8) erfassten Koordinaten und den Zeitstempel in der Speichervorrichtung (11) zu speichern.

11. Einrichtung nach einem der Ansprüche 7 bis 9, wobei die Bilddetektorvorrichtung (14, 15) als Reaktion auf einen manuellen Befehl, der über eine Befehlsschnittstelle (13) empfangen werden kann, aktivierbar ist, 16) aktivierbar ist und ein endgültiges Referenzbild (IMGRF) des Behälters (2) aufnimmt, und die Verarbeitungseinheit (10) so konfiguriert ist, dass sie das endgültige Referenzbild (IMGRF) mit entsprechenden, von der Satellitenpositionierungsvorrichtung (8) erfassten Koordinaten und einem entsprechenden Zeitstempel verknüpft und das endgültige Referenzbild (IMGRF), die von der Satellitenpositionierungsvorrichtung (8) erfassten Koordinaten und den Zeitstempel in der Speichervorrichtung (11) speichert.

12. Einrichtung nach Anspruch 10 oder 11, wobei die Bilderfassungsvorrichtung (14, 15) so konfiguriert ist, dass sie als Reaktion auf einen Befehl der Verarbeitungseinheit (10) ein Kontrollbild (IMGC) des Behälters (2) erfasst und wobei die Verarbeitungseinheit (10) so konfiguriert ist, dass sie:
- das Kontrollbild (IMGC) und das endgültige Referenzbild (IMGRF), das dem Behälter (2) zugeordnet und in der Speichereinrichtung (11) gespeichert ist, miteinander vergleicht; und
- programmierte Toleranzschwellen anwendet; und
- bestätigt oder verneint, ob das Kontrollbild (IMGC) und das endgültige Referenzbild (IMGRF), die dem Behälter (2) zugeordnet und in der Speichervorrichtung (11) gespeichert sind, auf der Grundlage des Vergleichs und der Toleranzschwellen identisch sind.

13. Einrichtung nach Anspruch 12 in Abhängigkeit von Anspruch 6, wobei die Verarbeitungseinheit (10) so konfiguriert ist, dass sie die grafischen Zeichen (25) des Kontrollbildes (IMGC) und des endgültigen Referenzbildes (IMGRF), die dem Behälter (2) zugeordnet und in der Speichereinrichtung (11) gespeichert sind, erkennt und vergleicht.

14. Einrichtung nach einem der Ansprüche 1 bis 13, wobei die Speichervorrichtung (11) zulässige Werte für Erkennungsparameter zur Identifizierung von Agrarlebensmitteleinheiten enthält und die Verarbeitungseinheit (10) so konfiguriert ist, dass sie das Vorhandensein von Objekten identifiziert, die nicht mit den zulässigen Werten für die Erkennungsparameter kompatibel sind.

15. Einrichtung nach einem der Ansprüche 1 bis 14, wobei der Behälter (2) eine stapelbare Kommissionierbox ist und die Verbindungselemente (4) aus einer stapelbaren Box bestehen, die mit dem Behälter (2) identisch ist.

16. Einrichtung nach einem der vorstehenden Ansprüche, wobei die Bilddetektorvorrichtung (14, 15) so konfiguriert ist, dass sie als Reaktion auf einen Befehl der Verarbeitungseinheit (10) ein Landschaftsbild um den Rahmen (3) herum aufnimmt, und die Verarbeitungseinheit (10) so konfiguriert ist, dass sie die Aufnahme eines Landschaftsbildes (IMGP) als Reaktion auf eine von der Satellitenpositionierungsvorrichtung (8) erfasste Koordinatenänderung erneut anfordert.

17. Einrichtung nach einem der vorstehenden Ansprüche, umfassend ein drahtloses Kommunikationsmodul (12), das zur Kommunikation mit einer entfernten Station konfiguriert ist.

18. System zur Rückverfolgbarkeit von Agrarlebensmitteln, das mindestens eine Einrichtung (1) nach einem der vorhergehenden Ansprüche und eine Fernstation (301) mit einer Datenbank (302) umfasst, wobei die Verarbeitungseinheit (10) jeder Einrichtung (1) so konfiguriert ist, dass sie in der Datenbank (302) die von der jeweiligen Bilddetektorvorrichtung (14, 15; 64) aufgenommenen Bilder mit dem jeweiligen Zeitstempel und mit den von der jeweiligen Satellitenpositionierungsvorrichtung (8) erfassten Koordinaten speichert.

## Revendications

1. Équipement d'aide à la traçabilité de produits agroalimentaires, comprenant :
un récipient (2 ; 52) pour la récolte de produits agroalimentaires qui est ouvert vers le haut ;
un cadre (3 ; 53), pourvu d'éléments de liaison (4 ; 54) au récipient (2 ; 52) ;
un dispositif de détection d'images (14, 15 ; 64), monté sur le cadre (3 ; 53) et orienté de telle sorte que, lorsque le récipient (2 ; 52) est relié au cadre (3 ; 53), une ouverture du récipient se trouve dans une zone d'observation (R1 ; R1') encadrée par le dispositif de détection d'images (14, 15 ; 64) ;
un capteur de mouvement (7 ; 57) monté sur le cadre (3 ; 53) et configuré pour détecter les mouvements dans une zone de surveillance (R2 ; R2') incluant au moins une portion de la zone d'observation (R1 ; R1') encadrée par le dispositif de détection d'images (14, 15 ; 64) ;
(8) ;un dispositif de positionnement par satellites
un dispositif de stockage (11) ;
une unité de traitement (10) ;
dans lequel le dispositif de détection d'images (14, 15 ; 64) est couplé au capteur de mouvement (7 ; 57) et est configuré pour acquérir au moins une image de référence (IMGR, IMGRF) en réponse à un mouvement détecté par le capteur de mouvement (7 ; 57) ;
et dans lequel l'unité de traitement (10) est configurée pour associer l'image de référence (IMGR, IMGRF) aux coordonnées détectées par le dispositif de positionnement par satellites (8) et à un horodatage et pour stocker l'image de référence (IMGR, IMGRF), les coordonnées détectées par le dispositif de positionnement par satellites (8) et l'horodatage dans le dispositif de stockage (11).

2. Équipement selon la revendication 1, comprenant un lecteur d'étiquettes d'identification (9), dans lequel le récipient (2) est pourvu d'une étiquette d'identification (2a) identifiable par le lecteur d'étiquettes d'identification (9).

3. Équipement selon la revendication 2,
dans lequel l'unité de traitement (10) est couplée de manière communicative au lecteur d'étiquettes d'identification (9) et est configurée pour associer l'image de référence (IMGR, IMGRF) acquise par le dispositif de détection d'images (14, 15) à un code d'identification de l'étiquette d'identification (2a) sur le récipient (2).

4. Équipement selon l'une quelconque des revendications 1 à 3,
comprenant un distributeur (22) fournissant un film anti-sabotage (23), applicable pour fermer le récipient (2).

5. Équipement selon la revendication 4,
dans lequel le film anti-sabotage (23) présente des lignes d'affaiblissement (24), de sorte qu'une fois appliqué, le film anti-sabotage (23) se brise le long des lignes d'affaiblissement (24) lors d'une tentative d'enlèvement.

6. Équipement selon la revendication 4 ou 5, dans lequel le film anti-sabotage (23) présente, sur une face (23a), des signes graphiques (25) qui ne se répètent pas ou qui se répètent avec une période spatiale supérieure à la longueur du film anti-sabotage (23) nécessaire pour fermer le récipient (2) .

7. Équipement selon l'une quelconque des revendications 1 à 6,
comprenant un dispositif de pesage (17), configuré pour déterminer le poids du récipient (2).

8. Équipement selon la revendication 7,
dans lequel le dispositif de pesage (17) comprend un module de traitement (18), des capteurs de poids (19), disposés de manière à être chargés par le récipient (2) relié au cadre (3), et un inclinomètre (20), et dans lequel l'unité de traitement (10) est configurée pour déterminer le poids du récipient (2) sur la base d'une réponse des capteurs de poids (19) et d'une réponse de l'inclinomètre (20).

9. Équipement selon la revendication 7 ou 8, dans lequel l'unité de traitement (10) est configurée pour estimer un volume de produit à l'intérieur du récipient (2) à partir de l'image de référence (IMGR, IMGRF) acquise et pour déterminer le poids du récipient (2) sur la base du volume estimé et des informations sur le produit stockées dans le dispositif de stockage (11).

10. Équipement selon l'une quelconque des revendications 7 à 9,
dans lequel le dispositif de détection d'images (14, 15) peut être activé pour acquérir une image de référence finale (IMGRF) du récipient (2) en réponse à une réduction de poids détectée par le dispositif de pesage (17) et l'unité de traitement (10) est configurée pour associer l'image de référence finale (IMGRF) à des coordonnées respectives détectées par le dispositif de positionnement par satellites (8) et à un horodatage respectif et pour stocker l'image de référence finale (IMGRF), les coordonnées détectées par le dispositif de positionnement par satellites (8) et l'horodatage dans l'unité de stockage (11).

11. Équipement selon l'une quelconque des revendications 7 à 9,
dans lequel le dispositif de détection d'images (14, 15) peut être activé en réponse à une commande manuelle qui peut être reçue à travers une interface de commande (13, 16) et pour acquérir une image de référence finale (IMGRF) du récipient (2) et l'unité de traitement (10) est configurée pour associer l'image de référence finale (IMGRF) à des coordonnées respectives détectées par le dispositif de positionnement par satellites (8) et à un horodatage respectif et pour stocker l'image de référence finale (IMGRF), les coordonnées détectées par le dispositif de positionnement par satellites (8) et l'horodatage dans l'unité de stockage (11).

12. Équipement selon la revendication 10 ou 11, dans lequel le dispositif de détection d'images (14, 15) est configuré pour acquérir une image de contrôle (IMGC) du récipient (2) en réponse à une commande de l'unité de traitement (10) et dans lequel l'unité de traitement (10) est configurée pour :
comparer l'image de contrôle (IMGC) et l'image de référence finale (IMGRF) associées au récipient (2) et stockées dans le dispositif de stockage (11) ; et
appliquer des seuils de tolérance programmés ; et
confirmer ou infirmer que l'image de contrôle (IMGC) et l'image de référence finale (IMGRF), associées au récipient (2) et stockées dans le dispositif de stockage (11), sont identiques sur la base de la comparaison et des seuils de tolérance.

13. Équipement selon la revendication 12 dépendant de la revendication 6,
dans lequel l'unité de traitement (10) est configurée pour reconnaître et comparer les signes graphiques (25) de l'image de contrôle (IMGC) et de l'image de référence finale (IMGRF) associées au récipient (2) et stockées dans le dispositif de stockage (11).

14. Équipement selon l'une quelconque des revendications 1 à 13,
dans lequel le dispositif de stockage (11) contient des valeurs admissibles pour des paramètres de reconnaissance pour identifier les unités de produits agroalimentaires, et l'unité de traitement (10) est configurée pour identifier la présence d'objets non compatibles avec les valeurs admissibles pour les paramètres de reconnaissance.

15. Équipement selon l'une quelconque des revendications 1 à 14,
dans lequel le récipient (2) est une boîte de prélèvement empilable et les éléments de liaison (4) comprennent une boîte empilable identique au récipient (2).

16. Équipement selon l'une quelconque des revendications précédentes, dans lequel le dispositif de détection d'images (14, 15) est configuré pour acquérir une image de paysage autour du cadre (3) en réponse à une commande de l'unité de traitement (10) et l'unité de traitement (10) est configurée pour demander l'acquisition d'une image de paysage (IMGP) en réponse à un changement de coordonnées détecté par le dispositif de positionnement par satellites (8).

17. Équipement selon l'une quelconque des revendications précédentes, comprenant un module de communication sans fil (12) configuré pour communiquer avec une station distante.

18. Système pour la traçabilité de produits agroalimentaires, comprenant au moins une pièce d'équipement (1) selon l'une quelconque des revendications précédentes et une station distante (301) comprenant une base de données (302), dans lequel l'unité de traitement (10) de chaque pièce d'équipement (1) est configurée pour stocker dans la base de données (302) les images acquises par le dispositif de détection d'images respectif (14, 15 ; 64) avec l'horodatage respectif et avec les coordonnées détectées par le dispositif de positionnement par satellites respectif (8).
